(19) **Europäisches Patentamt European Patent Office Office européen des brevets**

(11) **EP 4 645 934 A1**

(12) **EUROPEAN PATENT APPLICATION**
published in accordance with Art. 153(4) EPC

(43) Date of publication:
**05.11.2025 Bulletin 2025/45**

(21) Application number: **22970241.0**

(22) Date of filing: **28.12.2022**

(51) International Patent Classification (IPC):
*H04W 24/02* (2009.01)          *H04W 56/00* (2009.01)
*H04W 74/08* (2024.01)          *H04W 24/10* (2009.01)
*G06N 3/08* (2023.01)

(52) Cooperative Patent Classification (CPC):
**G06N 3/08; H04W 24/02; H04W 24/10;**
**H04W 56/00; H04W 74/08**

(86) International application number:
**PCT/KR2022/021517**

(87) International publication number:
**WO 2024/143602 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **LG Electronics Inc.**
**Yeongdeungpo-gu**
**Seoul 07336 (KR)**

(72) Inventors:
• **KIM, Yeongjun**
 **Seoul 06772 (KR)**

• **LEE, Sangrim**
 **Seoul 06772 (KR)**
• **KIM, Bonghoe**
 **Seoul 06772 (KR)**
• **LEE, Kyungho**
 **Seoul 06772 (KR)**
• **LIM, Taesung**
 **Seoul 06772 (KR)**
• **JO, Minseok**
 **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD FOR TRANSMITTING AND RECEIVING SIGNALS IN WIRELESS COMMUNICATION SYSTEM, AND DEVICE SUPPORTING SAME**

(57) An embodiment relates to a next-generation wireless communication system for supporting higher data transmission rates or the like after the 4th generation (4G) wireless communication system. According to an embodiment, a method for transmitting and receiving signals in a wireless communication system and a device supporting same may be provided, and another embodiment may be provided.

**FIG. 18**

UE

obtaining DNN candidates — 1801

transmitting information regarding DNN candidates — 1803

EP 4 645 934 A1

**Description**

**TECHNICAL FIELD**

An embodiment relates to a wireless communication system.

**BACKGROUND**

As a number of communication devices have required higher communication capacity, the necessity of the mobile broadband communication much improved than the existing radio access technology (RAT) has increased. In addition, massive machine type communications (MTC) capable of providing various services at anytime and anywhere by connecting a number of devices or things to each other has been considered in the next generation communication system. Moreover, a communication system design capable of supporting services/user equipments (UEs) sensitive to reliability and latency has been discussed.

**DISCLOSURE**

**Technical Problem**

An embodiment may provide a method of transmitting and receiving a signal in a wireless communication system, and an apparatus supporting the same.
It will be appreciated by persons skilled in the art that the objects that could be achieved with the embodiment is not limited to what has been particularly described hereinabove and the above and other objects that the embodiment could achieve will be more clearly understood from the following detailed description.

**Technical Solution**

An embodiment may provide a method of transmitting and receiving a signal in a wireless communication system, and an apparatus supporting the same.
According to an embodiment, a method performed by a user equipment in a wireless communication system may be provided.
According to an embodiment, the method may include obtaining a plurality of deep neural network (DNN) candidates from among a plurality of DNNs.
According to an embodiment, the method may include transmitting report information including information regarding the plurality of DNN candidates.
According to an embodiment, the plurality of DNN candidates may be obtained based on results of pre-training performed in advance based on a second number of target channel environments among a first number of target channel environments obtained by dividing an entire target channel environment.
According to an embodiment, the second number may be smaller than the first number.
According to an embodiment, each DNN included in the plurality of DNNs may be pre-trained based on each target channel environment included in the second number of target channel environments.
According to an embodiment, a number of the plurality of DNNs may be equal to the second number.
According to an embodiment, based on that a specific target channel environment determined from the first number of target channel environments is not included in the second number of target channel environments, the plurality of DNN candidates may be determined from among a plurality of DNNs pre-trained based on target channel environments adjacent to the specific target channel environment within the second number of target channel environments, where loss due to channel environment mismatch is less than a predefined threshold.
According to an embodiment, the report information may include information regarding the specific target channel environment.
According to an embodiment, information regarding DNN pairs related to the plurality of DNN candidates may be received in response to the report information.
According to an embodiment, DNN combining may be performed based on a plurality of DNNs included in the DNN pairs.
According to an embodiment, a user equipment (UE) configured to operate in a wireless communication system may be provided.
According to an embodiment, the UE may include: a transceiver; and at least one processor connected to the transceiver.
According to an embodiment, the at least one processor may be configured to obtain a plurality of DNN candidates from among a plurality of DNNs.

According to an embodiment, the at least one processor may be configured to transmit report information including information regarding the plurality of DNN candidates.

According to an embodiment, the plurality of DNN candidates may be obtained based on results of pre-training performed in advance based on a second number of target channel environments among a first number of target channel environments obtained by dividing an entire target channel environment.

According to an embodiment, the second number may be smaller than the first number.

According to an embodiment, each DNN included in the plurality of DNNs may be pre-trained based on each target channel environment included in the second number of target channel environments.

According to an embodiment, a number of the plurality of DNNs may be equal to the second number.

According to an embodiment, based on that a specific target channel environment determined from the first number of target channel environments is not included in the second number of target channel environments, the plurality of DNN candidates may be determined from among a plurality of DNNs pre-trained based on target channel environments adjacent to the specific target channel environment within the second number of target channel environments, where loss due to channel environment mismatch is less than a predefined threshold.

According to an embodiment, the report information may include information regarding the specific target channel environment.

According to an embodiment, information regarding DNN pairs related to the plurality of DNN candidates may be received in response to the report information.

According to an embodiment, DNN combining may be performed based on a plurality of DNNs included in the DNN pairs.

According to an embodiment, the at least one processors may be configured to communicate with at least one of a mobile terminal, a network, and an autonomous vehicle other than a vehicle including the UE.

According to an embodiment, a method performed by a base station (BS) in a wireless communication system may be provided.

According to an embodiment, the method may include receiving report information including information regarding a plurality of DNN candidates.

According to an embodiment, the method may include obtaining the plurality of DNN candidates based on the report information.

According to an embodiment, the plurality of DNN candidates may be included in a plurality of DNNs.

According to an embodiment, the plurality of DNN candidates may be obtained based on results of pre-training performed in advance based on a second number of target channel environments among a first number of target channel environments obtained by dividing an entire target channel environment.

According to an embodiment, the second number may be smaller than the first number.

According to an embodiment, a BS configured to operate in a wireless communication system may be provided.

According to an embodiment, the BS may include: a transceiver; and at least one processor connected to the transceiver.

According to an embodiment, the at least one processor may be configured to receive report information including information regarding a plurality of DNN candidates.

According to an embodiment, the at least one processor may be configured to obtain the plurality of DNN candidates based on the report information.

According to an embodiment, the plurality of DNN candidates may be included in a plurality of DNNs.

According to an embodiment, the plurality of DNN candidates may be obtained based on results of pre-training performed in advance based on a second number of target channel environments among a first number of target channel environments obtained by dividing an entire target channel environment.

According to an embodiment, the second number may be smaller than the first number.

According to an embodiment, an apparatus configured to operate in a wireless communication system may be provided.

According to an embodiment, the apparatus may include: at least one processor; and at least one memory operably connected to the at least one processor and storing one or more instructions that, based on execution, cause the at least one processor to perform operations.

According to an embodiment, the operations may include obtaining a plurality of DNN candidates from among a plurality of DNNs.

According to an embodiment, the operations may include transmitting report information including information regarding the plurality of DNN candidates.

According to an embodiment, the plurality of DNN candidates may be obtained based on results of pre-training performed in advance based on a second number of target channel environments among a first number of target channel environments obtained by dividing an entire target channel environment.

According to an embodiment, the second number may be smaller than the first number.

According to the embodiment, a non-transitory processor-readable medium configured to store one or more instructions that cause at least one processor to perform operations may be provided.

According to an embodiment, the operations may include obtaining a plurality of DNN candidates from among a plurality of DNNs.

According to an embodiment, the operations may include transmitting report information including information regarding the plurality of DNN candidates.

According to an embodiment, the plurality of DNN candidates may be obtained based on results of pre-training performed in advance based on a second number of target channel environments among a first number of target channel environments obtained by dividing an entire target channel environment.

According to an embodiment, the second number may be smaller than the first number.

The above-described embodiment is only part of embodiments, and various embodiments reflecting the technical features of the embodiment may be derived and understood by those skilled in the art from the following detailed description.

**Advantageous Effects**

According to an embodiment, a signal may be effectively transmitted and received in a wireless communication system.

According to an embodiment, learning for artificial intelligence (AI) may be performed effectively.

It is to be understood that both the foregoing general description and the following detailed description of the disclosure are exemplary and explanatory and are intended to provide further explanation of the disclosure as claimed.

**BRIEF DESCRIPTION OF THE DRAWINGS**

The drawings attached below are provided to help understand an embodiment and provide an embodiment together with a detailed description. However, the technical features of an embodiment are not limited to a specific drawing, and the features disclosed in each drawing may be combined with each other to form a new embodiment. Reference numerals in each drawing indicate structural elements.

FIG. 1 is a diagram illustrating physical channels and a signal transmission method using the physical channels, which may be used in the embodiment.

FIG. 2 is a diagram illustrating an example of a communication structure providable in a 6th generation (6G) system applicable to the disclosure.

FIG. 3 is a diagram showing an example of a perceptron structure to which an embodiment is applicable.

FIG. 4 is a diagram showing an example of a multi-perceptron structure to which an embodiment is applicable.

FIG. 5 is a diagram showing an example of a deep neural network to which an embodiment is applicable.

FIG. 6 is a diagram showing an example of a convolutional neural network to which an embodiment is applicable.

FIG. 7 is a diagram showing an example of a filter operation in a convolutional neural network to which an embodiment is applicable.

FIG. 8 is a diagram showing an example of a neural network structure in which a recurrent loop exists, to which an embodiment is applicable.

FIG. 9 is a diagram showing an example of an operational structure of a recurrent neural network to which an embodiment is applicable.

FIG. 10 is a diagram showing an example of a channel environment learning method to which an embodiment is applicable.

FIG. 11 is a diagram illustrating an example of the relationship between deep neural network (DNN) combining, training, and target channel environments according to an embodiment.

FIG. 12 is a diagram illustrating an example of DNN combining according to an embodiment.

FIG. 13 is a diagram illustrating an example of information required for DNN combining according to an embodiment.

FIG. 14 is a diagram illustrating an example of the relationship between DNN combining and information required for the DNN combining according to an embodiment.

FIG. 15 illustrates an example of classification of channel environments according to an embodiment.

FIG. 16 illustrates an example of classification of channel environments according to an embodiment.

FIG. 17 is a diagram briefly illustrating the operations of a user equipment (UE) and a network nodes according to an embodiment.

FIG. 18 is a flowchart illustrating the operations of a UE according to an embodiment.

FIG. 19 is a flowchart illustrating the operations of a network node according to an embodiment.

FIG. 20 is a diagram illustrating devices that implement an embodiment of the disclosure.

FIG. 21 illustrates an exemplary communication system applied to an embodiment of the disclosure.

FIG. 22 illustrates exemplary wireless devices applied to an embodiment.

FIG. 23 illustrates other exemplary wireless devices applied to an embodiment.

FIG. 24 illustrates an exemplary portable device applied to an embodiment.

FIG. 25 illustrates an exemplary vehicle or autonomous driving vehicle applied to an embodiment.

FIG. 26 is a diagram illustrating an exemplary artificial intelligence (AI) device to which an embodiment is applied.

## DETAILED DESCRIPTION

The embodiment is applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.
The embodiment is described in the context of a 3GPP communication system (e.g., including LTE, NR, 6G, and next-generation wireless communication systems) for clarity of description, to which the technical spirit of the embodiment is not limited. For the background art, terms, and abbreviations used in the description of the embodiment, refer to the technical specifications published before the disclosure. For example, the documents of 3GPP TS 36.211, 3GPP TS 36.212, 3GPP TS 36.213, 3GPP TS 36.300, 3GPP TS 36.321, 3GPP TS 36.331, 3GPP TS 36.355, 3GPP TS 36.455, 3GPP TS 37.355, 3GPP TS 37.455, 3GPP TS 38.211, 3GPP TS 38.212, 3GPP TS 38.213, 3GPP TS 38.214, 3GPP TS 38.215, 3GPP TS 38.300, 3GPP TS 38.321, 3GPP TS 38.331, 3GPP TS 38.355, 3GPP TS 38.455, and so on may be referred to.

## 1. 3GPP System

1.1. Physical Channels and Signal Transmission and Reception

In a wireless access system, a UE receives information from a base station (BS) on a downlink (DL) and transmits information to the BS on an uplink (UL). The information transmitted and received between the UE and the BS includes general data information and various types of control information. There are many physical channels according to the types/usages of information transmitted and received between the BS and the UE.

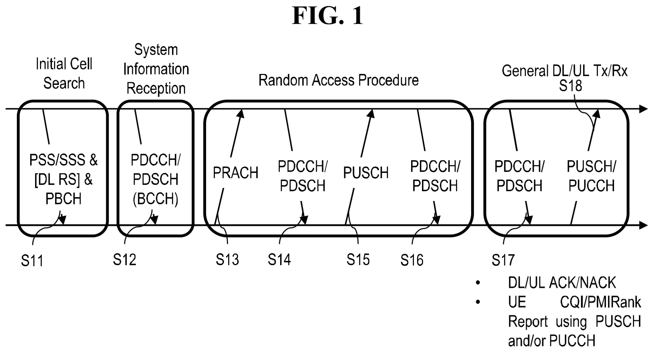

FIG. 1 is a diagram illustrating physical channels and a signal transmission method using the physical channels, which may be used in the embodiment.

When powered on or when a UE initially enters a cell, the UE performs initial cell search involving synchronization with a BS in step S11. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

Aside from the above 4-step random access procedure (4-step RACH procedure or type-1 random access procedure), when the random access procedure is performed in two steps (2-step RACH procedure or type-2 random access procedure), steps S13 and S15 may be performed as one UE transmission operation (e.g., an operation of transmitting message A (MsgA) including a PRACH preamble and/or a PUSCH), and steps S14 and S16 may be performed as one BS transmission operation (e.g., an operation of transmitting message B (MsgB) including an RAR and/or contention resolution information)

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure.

Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc.

In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

**Physical Resources**

The BS transmits the relevant signals to the UE via the downlink channel described herein, and the UE receives the relevant signals from the BS via the downlink channel described herein.

PDSCH carries downlink data (e.g., DL-SCH Transport Block (DL-SCHTB)), and modulation methods such as Quadrature Phase Shift Keying (QPSK), 16 Quadrature Amplitude Modulation (QAM), 64 QAM, 256 QAM and the like are applied. A codeword is generated by encoding a TB. The PDSCH may carry up to two codewords. Scrambling and modulation mapping are performed for each codeword, and modulation symbols generated from each codeword may be mapped into one or more layers. Each layer is mapped to a resource together with a Demodulation Reference Signal (DMRS), generated as an OFDM symbol signal, and transmitted through a corresponding antenna port.

The PDCCH may deliver downlink control information (DCI), for example, DL data scheduling information, UL data scheduling information, and so on. The PUCCH may deliver uplink control information (UCI), for example, an acknowledgement/negative acknowledgement (ACK/NACK) information for DL data, channel state information (CSI), a scheduling request (SR), and so on.

The PDCCH carries downlink control information (DCI) and is modulated in quadrature phase shift keying (QPSK). One PDCCH includes 1, 2, 4, 8, or 16 control channel elements (CCEs) according to an aggregation level (AL). One CCE includes 6 resource element groups (REGs). One REG is defined by one OFDM symbol by one (P)RB.

The PDCCH is transmitted in a control resource set (CORESET). A CORESET is defined as a set of REGs having a given numerology (e.g., SCS, CP length, and so on). A plurality of CORESETs for one UE may overlap with each other in the time/frequency domain. A CORESET may be configured by system information (e.g., a master information block (MIB)) or by UE-specific higher layer (RRC) signaling. Specifically, the number of RBs and the number of symbols (up to 3 symbols) included in a CORESET may be configured by higher-layer signaling.

The UE acquires DCI delivered on a PDCCH by decoding (so-called blind decoding) a set of PDCCH candidates. A set of PDCCH candidates decoded by a UE are defined as a PDCCH search space set. A search space set may be a common search space (CSS) or a UE-specific search space (USS). The UE may acquire DCI by monitoring PDCCH candidates in one or more search space sets configured by an MIB or higher-layer signaling. Each CORESET configuration is associated with one or more search space sets, and each search space set is associated with one CORESET configuration. One search space set is determined based on the following parameters.

The UE transmits the relevant signals to the BS via the uplink channel described above, and the BS receives the relevant signals from the UE via the uplink channel described above.

The PUSCH delivers UL data (e.g., a UL-shared channel transport block (UL-SCH TB)) and/or UCI, in cyclic prefix-orthogonal frequency division multiplexing (CP-OFDM) waveforms or discrete Fourier transform-spread-orthogonal division multiplexing (DFT-s-OFDM) waveforms. If the PUSCH is transmitted in DFT-s-OFDM waveforms, the UE transmits the PUSCH by applying transform precoding. For example, if transform precoding is impossible (e.g., transform precoding is disabled), the UE may transmit the PUSCH in CP-OFDM waveforms, and if transform precoding is possible (e.g., transform precoding is enabled), the UE may transmit the PUSCH in CP-OFDM waveforms or DFT-s-OFDM waveforms. The PUSCH transmission may be scheduled dynamically by a UL grant in DCI or semi-statically by higher-layer signaling (e.g., RRC signaling) (and/or layer 1 (L1) signaling (e.g., a PDCCH)) (a configured grant). The PUSCH transmission may be performed in a codebook-based or non-codebook-based manner.

The PUCCH delivers UCI, an HARQ-ACK, and/or an SR and is classified as a short PUCCH or a long PUCCH according to the transmission duration of the PUCCH. Table 7 lists exemplary PUCCH formats.

### 6G System

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 1 below. That is, Table 1 shows the requirements of the 6G system.

[Table 1]

| | |
|---|---|
| **Per device peak data rate** | 1 Tbps |
| **E2E latency** | 1 ms |
| **Maximum spectral efficiency** | 100bps/Hz |
| **Mobility support** | Up to 1000km/hr |
| **Satellite integration** | Fully |
| **AI** | Fully |
| **Autonomous vehicle** | Fully |
| **XR** | Fully |
| **Haptic Communication** | Fully |

At this time, the 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

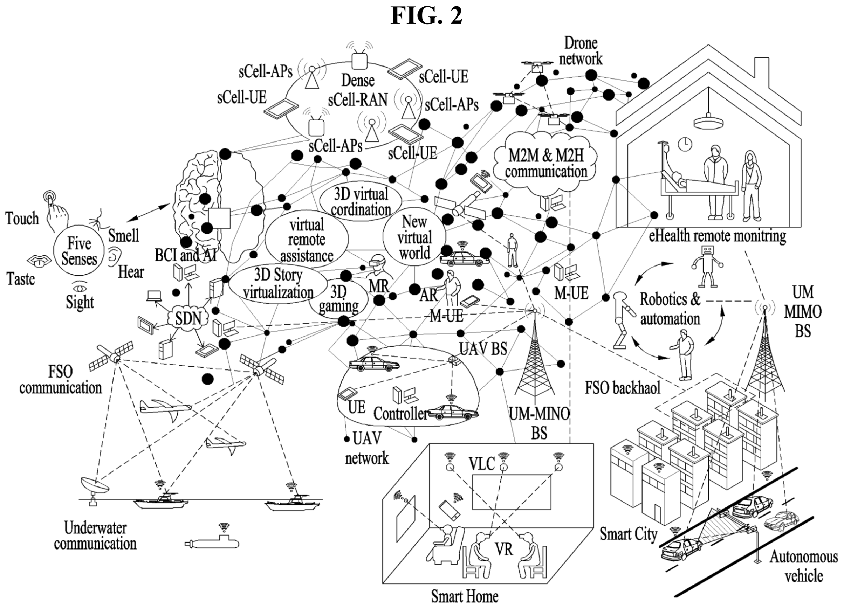

FIG. 2 is a view showing an example of a communication structure providable in a 6G system applicable to the disclosure.

Referring to FIG. 2, the 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.

**[0083]** - Satellites integrated network: To provide a global mobile group, 6G will be integrated with satellite. Integrating terrestrial waves, satellites and public networks as one wireless communication system may be very important for 6G.

**[0084]** - Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.

**[0085]** - Seamless integration of wireless information and energy transfer: A 6G wireless network may transfer power in order to charge the batteries of devices such as smartphones and sensors. Therefore, wireless information and energy transfer (WIET) will be integrated.

Ubiquitous super 3-dimension connectivity: Access to networks and core network functions of drones and very low earth orbit satellites will establish super 3D connection in 6G ubiquitous.

In the new network characteristics of 6G, several general requirements may be as follows.

Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5 GB) communication systems. Accordingly, the 6G communication system also employs the characteristics of the small cell network.

Ultra-dense heterogeneous network: Ultra-dense heterogeneous networks will be another important characteristic of the 6G communication system. A multi-tier network composed of heterogeneous networks improves overall QoS and reduces costs.

High-capacity backhaul: Backhaul connection is characterized by a high-capacity backhaul network in order to support high-capacity traffic. A high-speed optical fiber and free space optical (FSO) system may be a possible solution for this problem.

Radar technology integrated with mobile technology: High-precision localization (or location-based service) through communication is one of the functions of the 6G wireless communication system. Accordingly, the radar system will be integrated with the 6G network.

Softwarization and virtualization: Softwarization and virtualization are two important functions which are the bases of a design process in a 5 GB network in order to ensure flexibility, reconfigurability and programmability.

Artificial Intelligence

The most important and newly introduced technology in the 6G system is artificial intelligence (AI). The 4G system does not involve AI. The 5G system may support partial or very limited AI. However, the 6G system may be AI-supported for full automation. Advances in machine learning may generate a more intelligent network for real-time communications in 6G. Introducing AI into communications may simplify and improve real-time data transmission. The AI may determine a method of performing a complex target task by using numerous analyses. In other words, the AI may increase efficiency and reduce processing delay.

A time-consuming task such as handover, network selection, and resource scheduling may be performed instantly by using the AI. The AI may also play a significant role in M2M, machine-to-human, and human-to-machine communications. The AI may enable rapid communication through a brain computer interface (BCI). An AI-based communication system may be supported by a metamaterial, an intelligent structure, an intelligent network, an intelligent device, intelligent cognitive radio, a self-sustaining wireless network, and machine learning.

Recently, there have been attempts to integrate AI with wireless communication systems, but these have been focused on an application layer, a network layer, and especially deep learning in a field of wireless resource management and allocation. However, these researches have increasingly evolved to a MAC layer and a physical layer, and in particular, attempts have been made to combine deep learning with wireless transmission in the physical layer. AI-based physical layer transmission means applying signal processing and communication mechanisms based on AI drivers rather than traditional communication frameworks in terms of fundamental signal processing and communication mechanisms. For example, the AI-based physical layer transmission may include deep learning-based channel coding and decoding, deep learning-based signal estimation and detection, deep learning-based MIMO mechanism, and AI-based resource scheduling and allocation.

Machine learning may be used for channel estimation and channel tracking. Machine learning can be used for power allocation, interference cancellation, etc. in the DL physical layer. Machine learning may also be used in MIMO systems for antenna selection, power control, and symbol detection.

However, applying deep neural networks for transmission at the physical layer may have the following issues.

Deep learning-based AI algorithms require a large amount of training data to optimize training parameters. However, due to limitations in acquiring data from specific channel environments, a significant amount of training data is often used offline. Static training of training data in specific channel environments may lead to contradictions between the dynamic features and diversity of wireless channels.

Furthermore, current deep learning primarily targets real signals. However, signals at the physical layer of wireless communication are complex signals. More research is needed on neural networks for detecting complex-domain signals to match the characteristics of wireless communication signal.

Hereinafter, machine learning will be described in detail.

Machine learning refers to a series of operations for training machines to perform tasks that are difficult to be performed by human. Machine learning requires data and learning models. In machine learning, data learning methods may be broadly categorized into three types: supervised learning, unsupervised learning, and reinforcement learning.

Neural network learning aims to minimize errors in outputs. Neural network learning refers to a process of repeatedly inputting training data to a neural network, calculating the error of the output and target of the neural network for the training data, backpropagating the error of the neural network from the output layer of the neural network to the input layer to reduce the error, and updating the weight of each node of the neural network.

Supervised learning may use training data labeled with a correct answer, whereas unsupervised learning may use training data that is not labeled with a correct answer. For example, in the case of supervised learning for data classification, training data may be labeled with each category. The labeled training data may be input to the neural network, and the output (category) of the neural network may be compared with the label of the training data, thereby calculating the error. The calculated error may be backpropagated through the neural network in reverse (that is, from the output layer to the input layer), and the connection weight(s) of each node of each layer of the neural network may be updated based on the backpropagation. Changes in the updated connection weight(s) of each node may be determined based on the learning rate. The calculation of the neural network for input data and the backpropagation of the error may configure a learning epoch. The learning data may be applied differently depending on the number of repetitions of the learning epoch of the neural network. For example, in the early phase of learning of the neural network, a high learning rate may be used to increase efficiency such that the neural network rapidly ensures a certain level of performance, but in the late phase of learning, a low learning rate may be used to increase accuracy.

The learning method may vary depending on the feature of data. For example, learning may be performed based on supervised learning rather than unsupervised learning or reinforcement learning to allow a receiver to accurately predict data transmitted from a transmitter in a communication system.

The learning model corresponds to the human brain. To this end, the most basic linear model may be considered. However, a machine learning paradigm that uses highly complex neural network structures such as artificial neural networks as learning models is referred to as deep learning.

A neural network core used in learning methods are largely divided into deep neural networks (DNNs), convolutional deep neural networks (CNNs), and recurrent Boltzmann machines (RNNs).

An artificial neural network is an example of connecting a plurality of perceptrons.

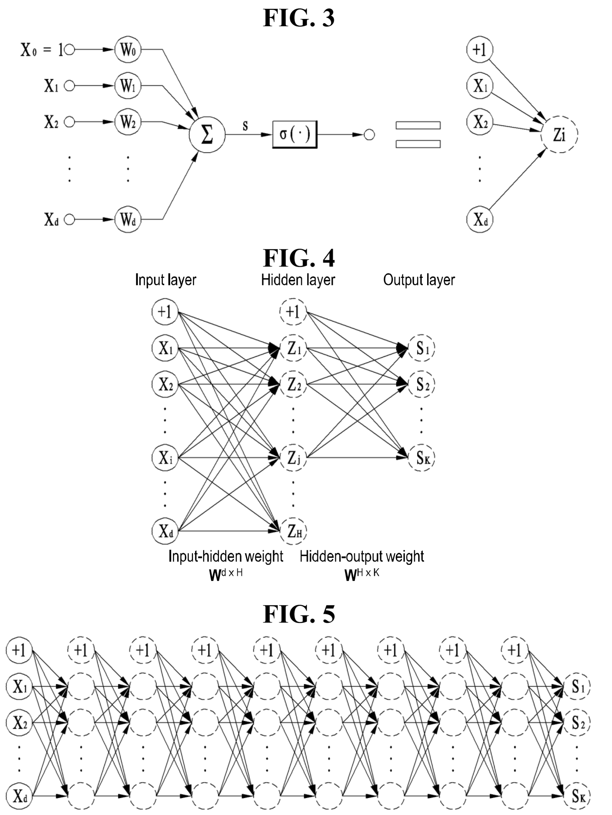

FIG. 3 is a diagram showing an example of a perceptron structure to which an embodiment is applicable.

FIG. 4 is a diagram showing an example of a multi-perceptron structure to which an embodiment is applicable.

Referring to FIG. 3, a process of receiving an input vector of $x = (x_1, x_2, ..., x_d)$, multiplying each component by a weight of $w = (w_1, w_2, ..., w_d)$, summing up the results, and then applying an activation function $\sigma(\cdot)$ is referred to as a perceptron. For a large artificial neural network structure, the simplified perceptron structure shown in FIG. 3 may be extended and applied to a multi-dimensional perceptron with different input vectors. For convenience of description, input or output values are referred to as nodes.

The perceptron structure illustrated in FIG. 3 may be described as including a total of three layers based on input and output values. An artificial neural network having H perceptrons of (d+1) dimensions between the first and second layers and K perceptrons of (H+1) dimensions between the second and third layers may be represented by the multilayer perceptron structure shown in FIG. 4.

A layer where input vectors are located is called an input layer, a layer where final output value(s) are located is called an output layer, and all layers between the input and output layers are referred to as hidden layers. The example in FIG. 4 discloses three layers, but when the number of actual artificial neural network layers is counted, the input layer is excluded, and thus it may be viewed as a total of two layers. An artificial neural network is constructed by two-dimensionally connecting perceptrons of basic blocks.

The aforementioned input layer, hidden layer, and output layer may be commonly applied not only to the multilayer perceptron structure but also to various artificial neural network structures such as CNNs, which will be discussed later. As the number of hidden layers increases, the artificial neural network becomes deeper, and the machine learning paradigm that uses sufficiently deep artificial neural networks as learning models is called deep learning. In addition, an artificial neural network used for deep learning are called DNNs.

FIG. 5 is a diagram showing an example of a deep neural network to which an embodiment is applicable.

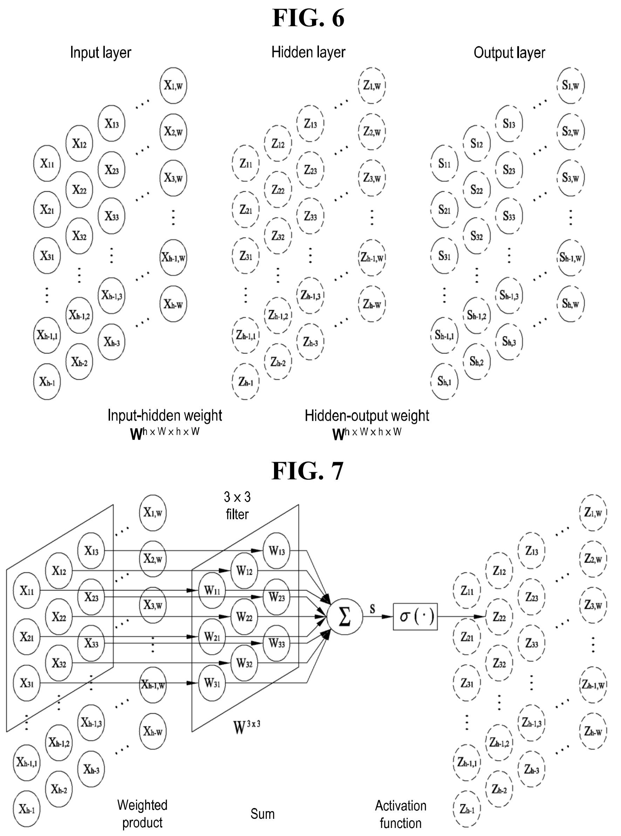

FIG. 6 is a diagram showing an example of a convolutional neural network to which an embodiment is applicable.

FIG. 7 is a diagram showing an example of a filter operation in a convolutional neural network to which an embodiment is applicable.

The deep neural network illustrated in FIG. 5 is a multilayer perceptron including eight layers with hidden + output layers. The multilayer perceptron structure is expressed as a fully-connected neural network. The fully-connected neural network has no connection between nodes located in the same layer and has only a connection between nodes located in adjacent layers. A DNN may have a fully-connected neural network, may include a combination of a plurality of hidden layers and activation functions, and may be usefully applied to identify correlation characteristic between input and output. Here, the correlation characteristic may mean a joint probability of input and output.

Depending on how a plurality of perceptrons are connected to each other, various artificial neural network structures different from the aforementioned DNN may be formed.

The DNN has nodes located within a single layer arranged in a one-dimensional vertical direction. However, in FIG. 6, it may be assumed that nodes are arranged two-dimensionally with w nodes horizontally and h nodes vertically (convolutional neural network structure of FIG. 6). In this case, a weight is applied to each connection in a connection process from one input node to the hidden layer, and thus a total of h×w weights need to be considered. There are h×w nodes in the input layer, and thus a total of $h^2w^2$ weights are required between two adjacent layers.

The convolutional neural network of FIG. 6 has a problem in that the number of weights increases exponentially according to the number of connections, and therefore, instead of considering connections of all nodes between adjacent layers, it assumes that there is a small filter, and weighted sum and activation function operations are performed on overlapping portions of the filters, as in FIG. 7.

One filter may have a weight corresponding to the number of its size, and learning of the weights may be performed such that a specific feature on an image may be extracted and output as a factor. In FIG. 7, a 3×3 filter is applied to a 3×3 region at the upper left of the input layer, and an output value of the weighted sum and activation function operations for the corresponding node is stored in z22.

The filter performs weighted sum and activation function operations while moving a certain distance horizontally and vertically while scanning the input layer, and positions the output value at the current filter location. This operational method is similar to a convolution operation on an image in the field of computer vision, and thus a deep neural network with this structure is called a convolutional neural network (CNN), and the hidden layer generated as a result of the convolution operation is called a convolutional layer. A neural network with a plurality of convolutional layers is called a deep convolutional neural network (DCNN).

In the convolution layer, the number of weights may be reduced by calculating the weighted sum including only the nodes located in an area covered by the filter from the node in which the current filter is located. This allows a single filter to be used to focus on features in a local region. Accordingly, the CNN may be effectively applied to image data processing, which is an important reference for determination. In the CNN, a plurality of filters may be applied just before the convolution layer, and a plurality of output results may be generated through the convolution operation of each filter.

There may be data for which sequence characteristics are important depending on data attribute. Considering the length variability and chronological relationship of these sequence data, a structure obtained by applying a method of inputting one element of the data sequence at each timestep and inputting an output vector (hidden vector) of the hidden layer output at a specific time together with a next element on the sequence to an artificial neural network is called a recurrent neural network structure.

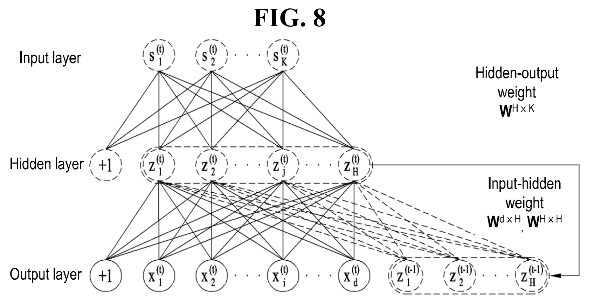

FIG. 8 is a diagram showing an example of a neural network structure in which a recurrent loop exists, to which an embodiment is applicable.

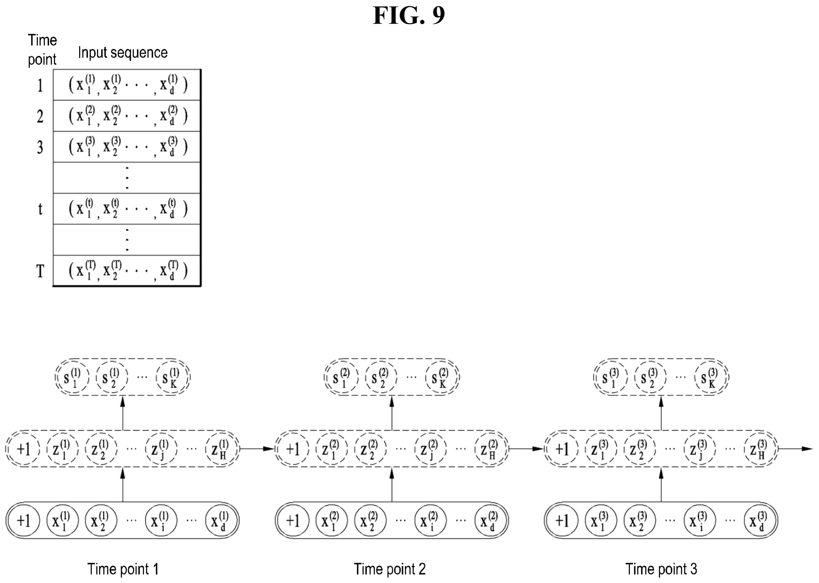

FIG. 9 is a diagram showing an example of an operational structure of a recurrent neural network to which an embodiment is applicable.

Referring to FIG. 8, a recurrent neural network (RNN) is a structure that inputs a hidden vector (z1(t-1), z2(t-1),..., zH(t-1)) of the immediately preceding time point t-1 and applies a weighted sum and activation function while inputting an element (x1(t), x2(t), ,..., xd(t)) of a time point t in a data sequence into a fully-connected neural network. As such, the hidden vector is transferred to the next time point because the information in the input vector from previous time points is considered to be accumulated in the hidden vector of the current time point.

Referring to FIG. 9, the recurrent neural network operates in a predetermined time order for the input data sequence.

When the input vector (x1(t), x2(t), ,..., xd(t)) at time point 1 is input to the recurrent neural network, the hidden vector (z1(1), z2(1),..., zH(1)) is input together with the input vector (x1(2), x2(2),..., xd(2)) at time point 2, and the hidden layer vector (z1(2), z2(2),..., zH(2)) is determined through the weighted sum and activation function. This process is repeatedly performed from time point 2, time point 3,,, up to time point T.

When a plurality of hidden layers are arranged within a recurrent neural network, this is called a deep recurrent neural network (DRNN). A recurrent neural network is designed to be useful for sequence data (e.g., natural language processing).

The recurrent neural network may be a neural network core used in a learning method, may include various deep learning schemes such as DNN, CNN, RNN, restricted Boltzmann machine (RBM), deep belief network (DBN), and deep Q-network, and may be applied to fields such as computer vision, speech recognition, natural language processing, and speech/signal processing.

Recently, there have been attempts to integrate AI with wireless communication systems, but these have been focused on an application layer, a network layer, and especially deep learning in a field of wireless resource management and allocation. However, these researches have increasingly evolved to a MAC layer and a physical layer, and in particular, attempts have been made to combine deep learning with wireless transmission in the physical layer. AI-based physical layer transmission means applying signal processing and communication mechanisms based on AI drivers rather than traditional communication frameworks in terms of fundamental signal processing and communication mechanisms. For example, the AI-based physical layer transmission may include deep learning-based channel coding and decoding, deep learning-based signal estimation and detection, deep learning-based MIMO mechanism, and AI-based resource scheduling and allocation.

**Embodiment**

Embodiments will be described below in more detail based on the above technical ideas. The foregoing description is applicable to the embodiments described below. For example, operations, functions, terms, and so on which are not defined in the embodiments described below may be performed and described based on the foregoing description.

The symbols/abbreviations/terms used in the description of an embodiment may be as follows.

- DL: Deep Learning
- NN: Neural Network
- BS: Base Station
- UE: User Equipment
- RS: Reference Signal
- ULA: Uniform linear array

In the description of the embodiments, BS may be understood as a comprehensive term that includes remote radio head (RRH), eNB, gNB, TP, reception point (RP), relay, and so on.

In the description of the embodiments, the BS may be a station and/or a transmitter/receiver, which is responsible for network control and/or data and/or synchronization protocols.

In the description of the embodiments, the phrase greater than/equal to or greater than A may be replaced with equal to or greater than/greater than A.

In the description of the embodiments, the phrase less than/equal to or less than B may be replaced with equal to or less than/less than B.

According to an embodiment, content related to a method of operating a DNN by combining a pre-trained DNN for a target channel environment where pre-training is not considered may be provided.

According to an embodiment, content related to information and signals for operating a DNN by combining a pre-trained DNN for a target channel environment where pre-training is not considered may be provided.

According to an embodiment, content related to a procedure for operating a DNN by combining a pre-trained DNN for a target channel environment where pre-training is not considered may be provided.

According to an embodiment, a method and device capable of being used in AI radio - C4AI (center for AI) may be provided.

According to an embodiment, reception reliability may be improved by mitigating performance degradation due to channel estimation errors

The DNN may be used after learning using training data. Therefore, when applying the DNN to a communication system, the DNN may need to learn and operate according to a change in the channel environment.

However, the channel of the communication environment has time varying characteristics, and thus to apply the DNN, it may be necessary to learn and operate the DNN according to the channel environment. There are two methods to operate the DNN according to the channel environment, including pre-training and online learning.

The online learning may be a method to perform DNN learning whenever a channel changes while performing communication. Therefore, a training overhead may be large because training needs to be performed continuously according to a change in the channel. On the other hand, pre-training may previously perform training on DNNs for all channel environments and may select and use a DNN suitable for the channel environment from among the trained DNNs when performing communication. Therefore, when pre-training is applied, the UE may need to store the pre-learned channel environment in memory or download and use the DNN model. In particular, the parameters of the DNN considered during pre-training increase when considering the entire channel environment, and thus applying pre-training to all channel environments may significantly increase the memory size or model download overhead of the UE.

When applying pre-training to a DNN for a communication system, if the channel environments in which training needs to be performed are sequentially divided, the number of channel environments to be considered during training becomes infinite, and thus pre-training may not be completed. Therefore, during pre-training, the entire channel may be divided into finite channel environments and training may be performed for each channel environment.

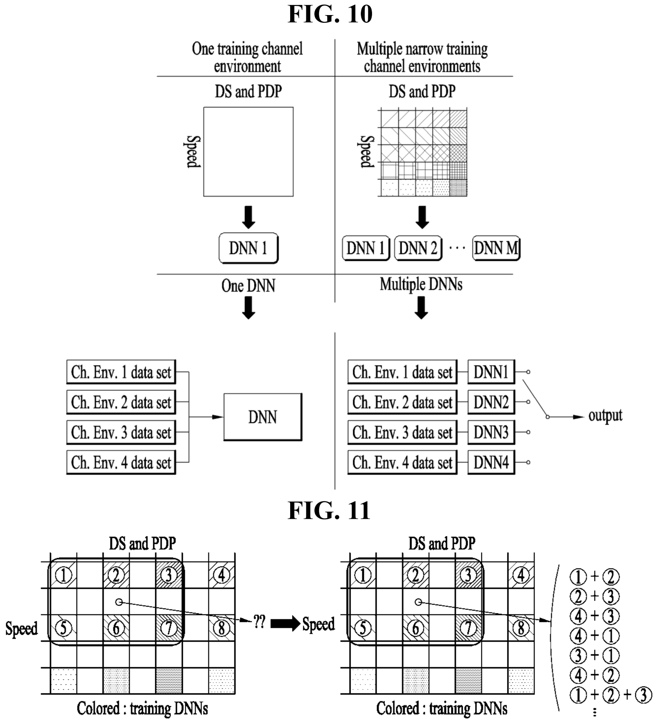

FIG. 10 is a diagram showing an example of a channel environment learning method to which an embodiment is applicable. In FIG. 10, speed may denote the speed of a UE (according to the mobility of the UE), DS may denote delay spread, and PDP may denote power delay profile.

Referring to FIG. 10, for example, the entire channel environment may be viewed as one training channel environment and one DNN may be trained for the entire channel, or a plurality of channel environments may be viewed and a plurality of DNNs may be trained according to each channel environment.

(For one training channel environment) when the entire environment is viewed as one training channel environment, the size of the DNN may increase because the expressive power of the DNN needs to be high. (For multiple narrow training channel environments) on the other hand, when the channel environment is divided and trained, a range of channel environments considered is narrow, and thus the DNN may be optimized to better suit the channel environment. The entire channel may be divided into finite channel environments, and a DNN suitable for each channel environment may be selectively used. In this case, model switching or selection may need to be performed to selectively use the DNN. Smaller DNNs may be used because a range of channel environments the DNNs need to operate is reduced. However, in this case, a plurality of DNNs need to be trained and used selectively according to a channel environment to operate on the entire channel, and thus the DNN size may increase when considering the entire channel environment. In particular, when the channel environment is segmented and divided, the number of parameters increases significantly, which may lead to difficulties when using pre-trained DNNs.

Hereinafter, embodiments will be described in detail. All or some of the embodiments described below may be combined to form another embodiment as long as they are the embodiments mutually exclusive, which may be clearly understood by persons skilled in the art.

Conventional Method

As described above with reference to FIG. 10, pre-training may be performed. When a single DNN is used to perform learning for the entire channel environment, the size of the DNN may become too large. Therefore, the entire channel environment may be divided into finite channel environments, and a DNN suitable for each channel environment may be selectively used. In this case, to selectively use the DNN, model switching or selection needs to be performed. To this end, DNN parameters are stored in the memory of the UE or downloaded from the BS.

Methods According to Embodiments

According to an embodiment, when pre-training is performed for finitely divided channel environments, training may be performed only for some channel environments, not all channel environments, and an operation method thereon may be provided.

According to an embodiment, when pre-training is performed, training may be conducted only for some channel environments, not all channel environments, thereby reducing the parameters of a pre-trained DNN.

However, when training is performed only for some channel environments, not all channel environments, differences may arise between a target channel environment and a training channel environment during communication, which may lead to performance degradation. According to an embodiment, provided is a method for reducing the number of DNN parameters by pre-training only for partial channels while simultaneously mitigating performance degradation caused by the differences between the training channel environment and the target channel environment.

According to an embodiment, provided is a method of combining a DNN pre-trained for partial channel environments to enable the DNN to operate even in target channel environments not considered during training, thereby reducing the number of DNN parameters.

According to an embodiment, reducing the number of DNN parameters may decrease the memory size of the UE and reduce the model download overhead.

FIG. 11 is a diagram illustrating an example of the relationship between DNN combining, training, and target channel environments according to an embodiment.

In FIG. 11, the term speed refers to the speed of the UE (due to the mobility of the UE), the term DS refers to delay spread, and the term PDP refers to power delay profile. In FIG. 11, the term DS and PDP may be replaced by propagation delay, and the term speed may be replaced by Doppler.

Referring to FIG. 11, the shaded area may represent a training channel environment where pre-training is performed.

According to the embodiment, after DNNs are trained for channel environments with filled colors, the DNNs may operate by combining DNNs trained in training channel environments adjacent to a target channel environment (for example, in the case of a target channel environment between channel environments 2 and 6, the training channel environments within the boundary including channel environments 1, 2, 3, 5, 6, and 7) and/or adjacent DNNs.

For example, in the case of a target channel environment between channel environments 2 and 6, the DNN trained in channel environment 1 and the DNN trained in channel environment 2 may be combined and operated.

Additionally/alternatively, for example, in the case of a target channel environment between channel environments 2 and 6, the DNN trained in channel environment 2 and the DNN trained in channel environment 3 may be combined and operated.

Additionally/alternatively, for example, in the case of a target channel environment between channel environments 2 and 6, the DNN trained in channel environment 4 and the DNN trained in channel environment 3 may be combined and operated.

Additionally/alternatively, for example, in the case of a target channel environment between channel environments 2 and 6, the DNN trained in channel environment 3 and the DNN trained in channel environment 1 may be combined and operated.

Additionally/alternatively, for example, in the case of a target channel environment between channel environments 2 and 6, the DNN trained in channel environment 4 and the DNN trained in channel environment 2 may be combined and operated.

Additionally/alternatively, for example, in the case of a target channel environment between channel environments 2 and 6, the DNN trained in channel environment 1, the DNN trained in channel environment 2, and the DNN trained in channel environment 3 may be combined and operated.

According to an embodiment, based on the DNN combining, DNNs may operate in channel environments that are not considered during pre-training.

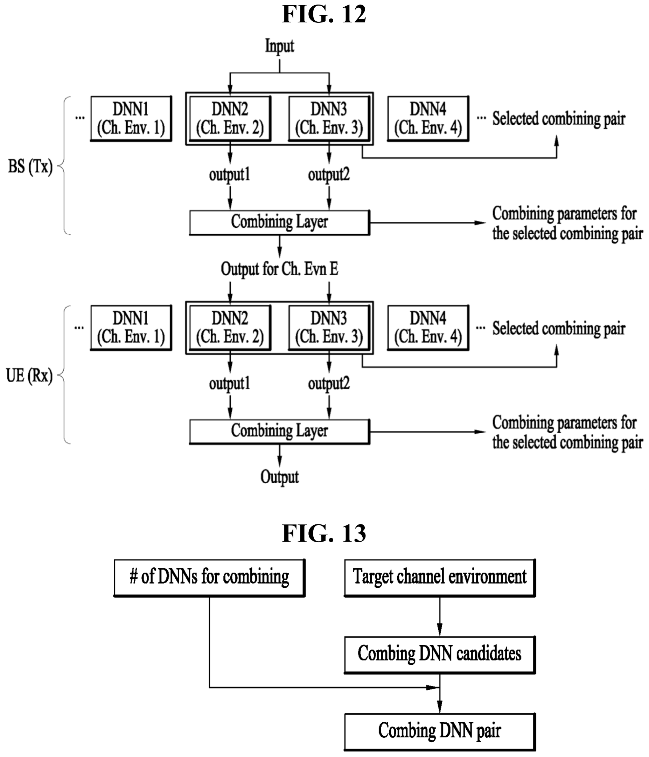

FIG. 12 is a diagram illustrating an example of DNN combining according to an embodiment.

FIG. 12 is a conceptual diagram of the DNN combining according to the embodiment. According to the embodiment, when DNNs operate in pairs between transmission (Tx) and reception (Rx) as in an autoencoder, combining of Tx DNNs and combining of Rx DNNs may be performed separately.

To perform the DNN combining according to the embodiment, a DNN to be used for combining may be selected from pre-trained DNNs according to a target channel environment, and parameters for a suitable combining layer may be selected.

For example, DNN 2 corresponding to channel environment 2 (Ch. Env. 2) and DNN 3 corresponding to channel environment 3 (Ch. Env. 3) may be selected at the BS (Tx) as a combining pair to be used for combining. For example, inputs are input into the selected DNNs 2 and 3, resulting in output 1 and output 2, which may then be input into the combining layer. For example, in the combining layer, parameters for the selected combining pair (DNNs 2 and 3) are combined, and a single output (output for channel environment E (Ch. Env. E)) may be produced based on the inputs of output 1 and output 2.

For example, the final output (output for Ch. Env. E) at the BS (Tx) may be used as input at the UE (Rx).

For example, DNN 2 corresponding to channel environment 2 (Ch. Env. 2) and DNN 3 corresponding to channel environment 3 (Ch. Env. 3) may be selected at the UE (Rx) as a combining pair to be used for the combination. For example, the final output (output for channel environment E (Ch. Env. E)) from the BS (Tx) is input into the selected DNNs 2 and 3, resulting in output 1 and output 2, which may then be input into the combining layer. For example, in the combining layer, parameters for the selected combining pair (DNNs 2 and 3) are combined, and a single output may be produced based on the inputs of output 1 and output 2.

In FIG. 12, the indices of the selected DNNs at the BS (Tx) and the indices of the selected DNNs at the UE (Rx) are selected to be the same, but, the embodiment is not limited thereto. For example, DNN 1 and DNN 2 may be selected at the BS (Tx), while DNN 3 and DNN 4 may be selected at the UE (Rx), and various combinations are possible.

For the DNN combining according to the embodiment, two operations may be required. According to the embodiment, the two operations may be pre-training and communication processes, which are described later.

FIG. 13 is a diagram illustrating an example of information required for DNN combining according to an embodiment.

FIG. 13 may be understood as illustrating information required for the DNN combining according to the embodiment shown in FIG. 12.

Referring to FIG. 13, DNN candidates used for the DNN combining may be determined based on target channel information. According to the embodiment, when the DNN combining candidates are determined, the status of the UE and/or BS may be considered.

For example, when up to 4 DNN candidates are considered for a specific target channel, specific DNNs may be excluded from the candidates based on the status of the BS and/or UE. For example, when DNN combining pairs are determined, the number of DNNs available for the combination at the UE may be determined. Then, appropriate DNN combining pairs may be selected, and the combining may be performed.

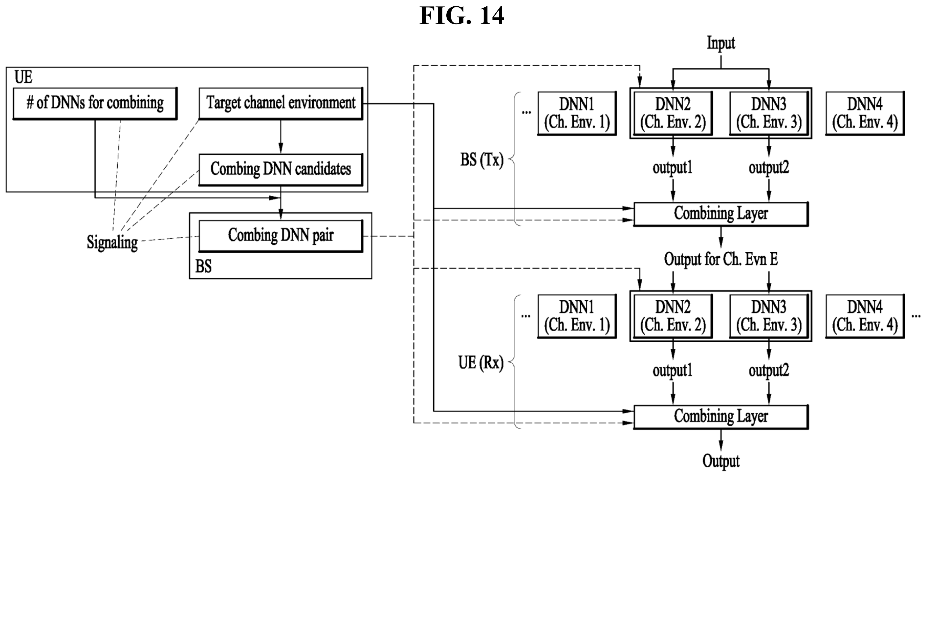

FIG. 14 is a diagram illustrating an example of the relationship between DNN combining and information required for the DNN combining according to an embodiment.

FIG. 14 may be understood as illustrating the relationship between the operations according to the embodiment in FIG. 12 and the information according to the embodiment in FIG. 13 as well as signaling information.

Referring to FIG. 14, according to the embodiment, DNN candidates used for the DNN combining may be determined based on target channel information. According to the embodiment, when the DNN combining candidates are determined, the status of the UE and/or BS may be considered.

For example, when up to 4 DNN candidates are considered for a specific target channel, specific DNNs may be excluded from the candidates based on the status of the BS and/or UE. According to the embodiment, when DNN combining pairs are determined, the number of DNNs available for the combination at the UE may be determined. Then, appropriate DNN combining pairs may be selected, and the combining may be performed.

For example, it is assumed that the UE determines the target channel environment and the BS determines the combining pair. In FIG. 14, the information included in the box labeled as UE may represent the part selected and determined by the UE.

According to the embodiment, the UE may determine the target channel environment and select the combining DNN candidates based on the status thereof. According to the embodiment, the UE may determine the number of combining DNNs to be used by the UE. According to the embodiment, the UE may transmit the corresponding information (e.g., the target channel environment, the combining DNN candidates, or the number of combining DNNs) to the BS. According to the embodiment, the BS may determine the combining DNN pairs by considering the number of combining DNNs to be used by the UE and the status thereof, and transmit the combining DNN pairs to the UE. For example, the combining DNN pairs may be determined based on the combining DNN candidates selected by the UE, but the present disclosure is not necessarily limited thereto.

According to the embodiment, the information included in the box labeled as UE may be considered in a combining layer, and the combining DNN pairs within the box labeled as BS may be considered in a DNN selection and combining layer to which inputs are to be input

In relation to the above-mentioned content, a procedure according to an embodiment will be described. According to the embodiment, the procedure may be divided into a pre-training process and a communication process.

According to the embodiment, the pre-training process is a process performed in advance, and it may be assumed that both the UE and BS are aware of pre-training results.

According to the embodiment, the communication process may be a process performed for DNN combining using the pre-training results. The embodiments described with reference to FIGS. 12 to 14 may correspond to a part of the communication process. According to the embodiment, since the results obtained from the pre-training process are used during the communication process, the pre-training process may also be included in the embodiment.

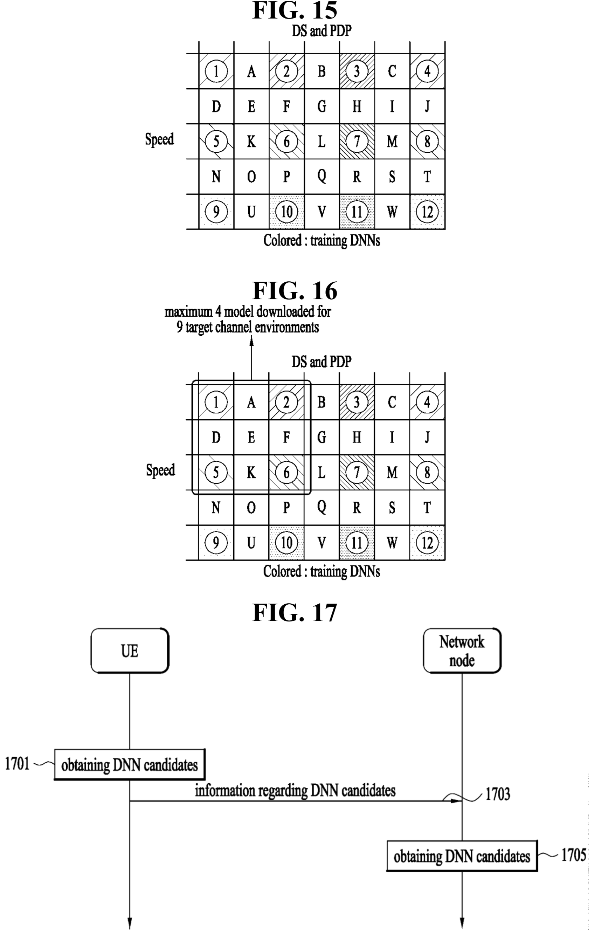

FIG. 15 illustrates an example of classification of channel environments according to an embodiment.

FIG. 16 illustrates an example of classification of channel environments according to an embodiment.

Referring to FIG. 15, for example, the channel environments may be classified as shown in FIG. 15. In FIG. 15, 1 to 12 may represent training channel environments where pre-training is performed or to be performed, and A to W may represent channel environments where pre-training is not performed. For example, during the communication process, a target channel environment may include both 1 to 12 and A to W.

Referring to FIG. 15, Table 2 shows an example of the pre-training process (pre-training phase) according to the embodiment.

Table 2

| |
|---|
| Step 1) Training DNNs for training channel environments 1~12 ($f_l$ : DNN, l (=1, 2, ..., 12)) |
| Step 2) Testing trained DNNs for the target channel environments A~W |
| $\quad$ Measuring loss caused by the channel environment mismatch |
| $$loss_{m,l} = \frac{1}{N} \sum_{n=0}^{N-1} L\left(x_n, f_l\left(y_{m,n}\right)\right), \; \text{m=A, B, ..., W}$$ |
| $\quad y_{m,n}$ : the n-th DNN input in channel environment m, $x_n$ : label of the n-th DNN input |
| Step 3) Defining combining DNN sets and pairs for each target channel environment |
| $\quad$ Combining DNN set: $S_m = \{l \| loss_{m,l} < Th\}$, where l: training channel environment, m: target channel environment |
| $\quad$ Ex) $S_m = \{1, 2, 5, 6\}$ for m = E, A, E, F, and K |
| $\quad$ If m = E, combining DNN pairs : $P_0 = (1, 2)$, $P_1 = (1, 5)$, $P_2 = (2, 5)$, $P_3 = (1, 2, 5)$, ..... |
| Step 4) Defining combining/separation parameters for channel environments and combing DNN pairs |

Step 1) For example, DNNs for channel environments 1 to 12 may be trained.

Step 2) For example, for channel environments A to W where training is not performed, testing of the trained DNNs may be performed.

For example, the testing may be based on measuring the loss caused by channel environment mismatch.

$$loss_{m,l} = \frac{1}{N} \sum_{n=0}^{N-1} L\left(x_n, f_l(y_{m,n})\right)$$

$$m = A, B, \ldots, W$$

$y_{m,n}$ : the n-th DNN input in channel environment m,
$x_n$ : label of the n-th DNN input
Step 3) For example, a set and/or pair of combining DNNs may be defined for each target channel environment. For example, the set of combining DNNs may be determined as follows.
Combining DNN set: $S_m = \{l \| loss_{m,l} < Th\}$
l: training channel environment,
m: target channel environment

For example, Th may be a specific threshold. That is, DNNs whose corresponding loss is below a specific threshold may be included in the combining DNN set.
For example, assuming $S_m = \{1, 2, 5, 6\}$ for m = A, D, E, F, and K, when m = E, the combining DNN pair Pn may be as follows.

$$P_0 = (1, 2), P_1 = (1, 5), P_2 = (2, 5), P_3 = (1, 2, 5), \ldots..$$

Referring to FIG. 16, for target channel environments A, D, E, F, K (and 9 target channel environments including 1 to 4), up to 4 models (corresponding to trained channel environments 1 to 4) may be downloaded.
Step 4) For example, combining/separating parameters and combining DNN pairs for channel environments may be determined.
Referring to FIG. 15, Table 3 shows an example of the communication phase according to the embodiment.

Table 3

| |
|---|
| Step 5) Decision on the target channel environment (by decision on the target channel at the UE) |
| Step 6-1) Selecting $S_m$ and $P_n$ for DNN combining using the result in 5 (UE procedure) |
|     UE has all information |
|     UE reports $P_n$ and the combining parameters to BS for autoencoder operation |
| Step 6-2) Selecting $S_m$ and $P_n$ for DNN combining using the result in 5 (BS procedure) |
|     UE reports the result of step 5 to BS for model download and autoencoder operation |
|     UE reports its model download history and memory status |

Step 5) For example, based on the target channel determination of the UE, the target channel environment may be determined.
It may operate according to either Step 6-1 (UE operation) or Step 6-2 (BS operation).
Step 6-1) For example, based on the results of Step 5 (i.e., based on the target channel environment), a trained channel environment $S_m$ and a combining DNN pair $P_n$ may be selected. For example, the combining DNN pair selected in Step 6-1 may be understood as the combining DNN pair preferred by the UE (the preference of the UE).
For example, the UE may have all the information. The information may be information required for performing combining based on the pre-trained DNN (e.g., the information in Table 2). However, since the UE does not need to know combining parameters on the Tx side, the combining parameters on the Tx side may not be included in the information.
For example, the UE may report $P_n$ and the combining parameters to the BS (for autoencoder operations). For example, the information reported to the BS may include information regarding the number of DNNs for the combination. For example, the trained channel environment $S_m$ may also be reported.
For example, the BS may select the best combining DNN pair based on the information reported by the UE, and in this case, the preference of the BS may also be considered. For example, the best combining DNN pair selected by the BS may be the same as $P_n$ reported by the UE and/or may be included in $P_n$. Additionally/alternatively, some may be included in $P_n$ while others are not. Additionally/alternatively, none of the best combining DNN pairs may be included in $P_n$.
Step 6-2) For example, based on the results of Step 5 (i.e., based on the target channel environment), the trained channel environment $S_m$ and the combining DNN pair $P_n$ may be selected.
For example, the UE may report the results of Step 5 to the BS (for model download and autoencoder operation).

For example, the BS may perform the operations in Step 6-2 based on the reported information.

For example, the UE may report the model download history and memory status.

FIG. 17 is a diagram briefly illustrating the operations of a UE and a network node according to an embodiment.

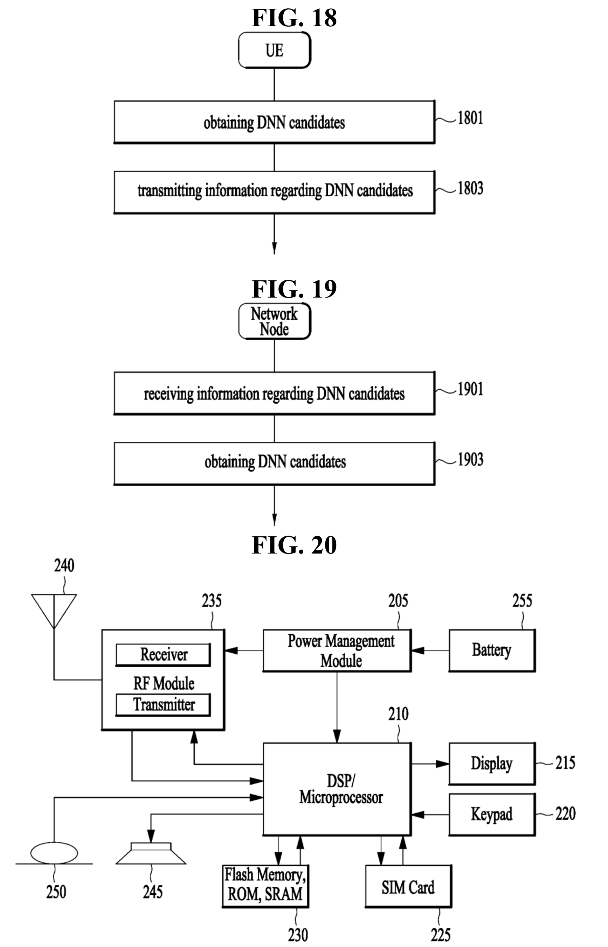

FIG. 18 is a flowchart illustrating the operations of a UE according to an embodiment.

FIG. 19 is a flowchart illustrating the operations of a network node according to an embodiment. For example, the network node may be a TP, a BS, a cell, another UE, and/or any device performing the same function.

Referring to FIGS. 17 to 19, in operations 1701 and 1801 according to the embodiments, the UE may acquire a plurality of DNN candidates from among a plurality of DNNs.

In operations 1703, 1803, and 1903 according to the embodiments, the UE may transmit report information including information regarding the plurality of DNN candidates, and the network node may receive the information.

In operations 1705 and 1905 according to the embodiments, the network node may acquire the plurality of DNN candidates.

According to an embodiment, the plurality of DNN candidates may be acquired based on the results of pre-training performed in advance based on a second number of target channel environments among a first number of target channel environments obtained by dividing an entire target channel environment.

According to an embodiment, the second number may be smaller than the first number.

The more specific operations of the UE and/or network node according to the above-mentioned embodiments may be explained and performed based on the contents of Sections 1 to 3 described above.

It will be appreciated that any of examples of the above-described proposed methods may also be included as one of the embodiments and thus considered to be a kind of proposed method. Further, the above-described proposed methods may be implemented independently, and some of them may also be implemented as a combination (or merged). It may be regulated that the BS indicates to the UE whether to apply the proposed methods (or information about rules for the proposed methods) through a predefined signal (e.g., a physical-layer signal or a higher-layer signal).

## 4. Exemplary Configurations of Devices Implementing Embodiment of the Disclosure

### 4.1. Exemplary Configurations of Devices to Which Embodiment Of the Disclosure is Applied

FIG. 20 is a diagram illustrating devices that implement various embodiments of the disclosure.

The devices illustrated in FIG. 20 may be a UE and/or a BS (e.g., an eNB or gNB, or a TP) adapted to perform the above-descried mechanism, or any devices that perform the same operations.

Referring to FIG. 20, the device may include a digital signal processor (DSP)/microprocessor 210 and a radio frequency (RF) module (transceiver) 235. The DSP/microprocessor 210 is electrically coupled to the transceiver 235 and controls the transceiver 235. The device may further include a power management module 205, a battery 255, a display 215, a keypad 220, a SIM card 225, a memory device 230, an antenna 240, a speaker 245, and an input device 250, depending on a designer's selection.

Particularly, FIG. 20 may illustrate a UE including a receiver 235 configured to receive a request message from a network and a transmitter 235 configured to transmit timing transmission/reception timing information to the network. These receiver and transmitter may form the transceiver 235. The UE may further include a processor 210 coupled to the transceiver 235.

Further, FIG. 20 may illustrate a network device including a transmitter 235 configured to transmit a request message to a UE and a receiver 235 configured to receive timing transmission/reception timing information from the UE. These transmitter and receiver may form the transceiver 235. The network may further include the processor 210 coupled to the transceiver 235. The processor 210 may calculate latency based on the transmission/reception timing information.

A processor included in a UE (or a communication device included in the UE) and a BS (or a communication device included in the BS) according to various embodiments of the disclosure may operate as follows, while controlling a memory.

In an embodiment, a UE or a BS may include: at least one transceiver; at least one memory; and at least one processor coupled to the transceiver and the memory. The memory may store instructions causing the at least one processor to perform the following operations.

A communication device included in the UE or the BS may be configured to include the at least one processor and the at least one memory. The communication device may be configured to include the at least one transceiver or to be coupled to the at least one transceiver without including the at least one transceiver.

A TP and/or a BS and/or a cell and/or any device that performs the same operation may be called a network node.

According to an embodiment, the at least one processor included in the UE (or at least one processor of the communication device included in the UE) may be configured to obtain a plurality of DNN candidates from among a plurality of DNNs.

According to an embodiment, the at least one processor included in the UE may be configured to transmit report information including information regarding the plurality of DNN candidates.

According to an embodiment, the plurality of DNN candidates may be obtained based on results of pre-training performed in advance based on a second number of target channel environments among a first number of target channel environments obtained by dividing an entire target channel environment.

According to an embodiment, the second number may be smaller than the first number.

According to an embodiment, the at least one processor included in the network node (or at least one processor of the communication device included in the network node) may be configured to receive report information including information regarding a plurality of DNN candidates.

According to an embodiment, the at least one processor included in the network node may be configured to obtain the plurality of DNN candidates based on the report information.

According to an embodiment, the plurality of DNN candidates may be included in a plurality of DNNs.

According to an embodiment, the plurality of DNN candidates may be obtained based on results of pre-training performed in advance based on a second number of target channel environments among a first number of target channel environments obtained by dividing an entire target channel environment.

According to an embodiment, the second number may be smaller than the first number.

The specific operations of the processors included in the UE and/or network node according to the above-mentioned embodiments may be explained and performed based on the contents of Sections 1 to 3 described above.

The embodiments may be implemented by combining with each other as long as the embodiments are not mutually exclusive. For example, the UE and/or network node (the processor included therein) according to the embodiments may perform the combined operations of the embodiments described in Sections 1 to 3 as long as the embodiments are not mutually exclusive. For example, the method performed by the UE (Rx) or the operations performed by the UE, the device for the UE, or the at least one processor based on execution of instructions in a memory or storage medium may include: detecting an SSB including a PSS, an SSS, and a PBCH; initiating a random access procedure including transmission of a PRACH based on the SSB; and performing UL transmission to the BS on a serving cell based on the random access procedure. In some implementations, the PRACH transmission may be performed on PRACH resources associated with the SSB. In some implementations, the UL transmission may include transmission of report information including information regarding the plurality of DNN candidates. The report information may be transmitted on a PUCCH or PUSCH. In another example, the method performed by the BS (Tx) or the operations performed by the BS, the device for the BS, or the at least one processor based on execution of instructions in a memory or storage medium may include: transmitting an SSB including a PSS, an SSS, and a PBCH; receiving a PRACH related to the SSB from the UE; and receiving a UL signal from the UE on a serving cell based on a random access procedure of the UE related to the PRACH. In some implementations, the UL signal may include report information including information regarding the plurality of DNN candidates. The report information may be received on a PUCCH or PUSCH.

### 4.2. Example of communication system to embodiment of the disclosure is applied

In the present specification, various embodiments of the disclosure have been mainly described in relation to data transmission and reception between a BS and a UE in a wireless communication system. However, various embodiments of the disclosure are not limited thereto. For example, various embodiments of the disclosure may also relate to the following technical configurations.

The various descriptions, functions, procedures, proposals, methods, and/or operational flowcharts of the various embodiments of the disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

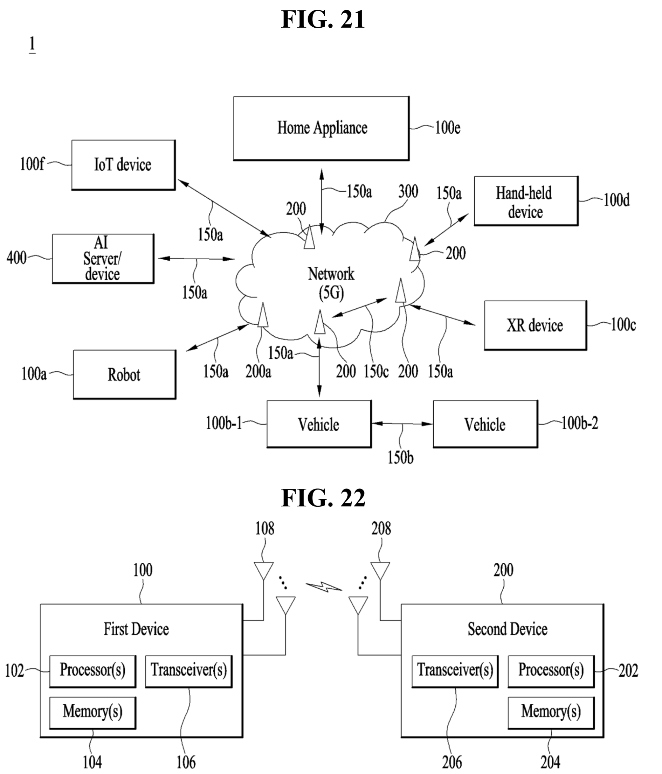

FIG. 21 illustrates an exemplary communication system to which various embodiments of the disclosure are applied.

Referring to FIG. 21, a communication system 1 applied to the various embodiments of the disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the various embodiments of the disclosure.

Example of wireless devices to which embodiment of the disclosure is applied

FIG. 22 illustrates exemplary wireless devices to which various embodiments of the disclosure are applicable.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the various embodiments of the disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the various embodiments of the disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

According to various embodiments of the disclosure, one or more memories (e.g., 104 or 204) may store instructions or programs which, when executed, cause one or more processors operably coupled to the one or more memories to perform operations according to various embodiments or implementations of the disclosure.

According to various embodiments of the disclosure, a computer-readable storage medium may store one or more instructions or computer programs which, when executed by one or more processors, cause the one or more processors to perform operations according to various embodiments or implementations of the disclosure.

According to various embodiments of the disclosure, a processing device or apparatus may include one or more processors and one or more computer memories connected to the one or more processors. The one or more computer memories may store instructions or programs which, when executed, cause the one or more processors operably coupled to the one or more memories to perform operations according to various embodiments or implementations of the disclosure.

Example of using wireless devices to which embodiment of the disclosure is applied

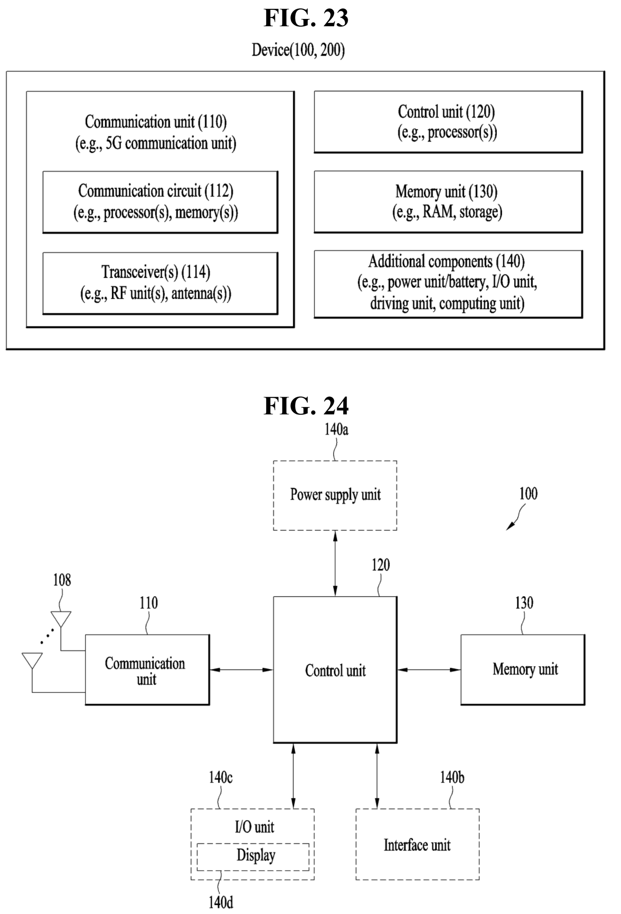

FIG. 23 illustrates other exemplary wireless devices to which various embodiments of the disclosure are applied. The wireless devices may be implemented in various forms according to a use case/service (see FIG. 21).

Referring to FIG. 23, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast UE, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 23 will be described in detail with reference to the drawings.

Example of portable device to which embodiment of the disclosure is applied

FIG. 24 illustrates an exemplary portable device to which various embodiments of the disclosure are applied. The portable device may be any of a smartphone, a smartpad, a wearable device (e.g., a smartwatch or smart glasses), and a portable computer (e.g., a laptop). A portable device may also be referred to as mobile station (MS), user terminal (UT), mobile subscriber station (MSS), subscriber station (SS), advanced mobile station (AMS), or wireless terminal (WT).

Referring to FIG. 24, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 23, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

<u>Example of vehicle or autonomous driving vehicle to which embodiment of the disclosure is applied</u>

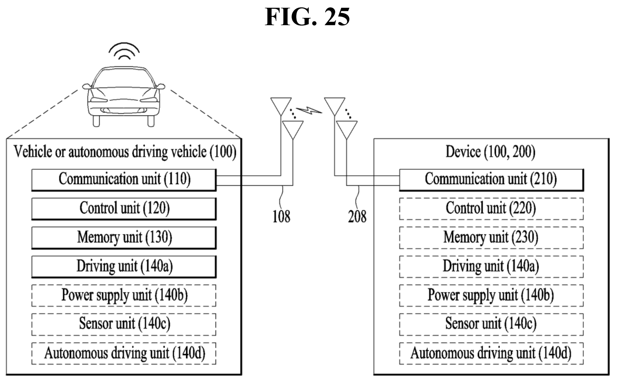

FIG. 25 illustrates an exemplary vehicle or autonomous driving vehicle to which various embodiments of the disclosure. The vehicle or autonomous driving vehicle may be implemented as a mobile robot, a car, a train, a manned/unmanned aerial vehicle (AV), a ship, or the like.

Referring to FIG. 25, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 23, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

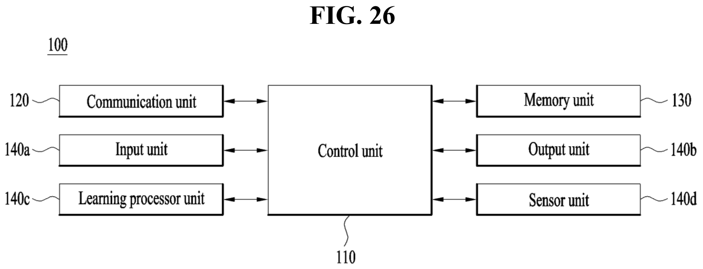

FIG. 26 is a view showing an example of artificial intelligence (AI) device applicable to the disclosure.

The AI device may be implemented as fixed or movable devices such as a TV, a projector, a smartphone, a PC, a laptop, a digital broadcast terminal, a tablet PC, a wearable device, a set-top box (STB), a radio, a washing machine, a refrigerator, a digital signage, a robot, a vehicle, or the like..

Referring to FIG. 26, The AI device 100 may include a communication unit (transceiver) 910, a control unit (controller) 120, a memory unit (memory) 130, an input/output unit 140a/140b, a leaning processor unit (learning processor) 140 c and a sensor unit 140 d. The blocks 110 to 130/140 a to 140 d may correspond to the blocks 110 to 130/140 of FIG. 23, respectively.

The communication unit 110 may transmit and receive wired/wireless signals (e.g., sensor information, user input, learning models, control signals, etc.) to and from external devices such as another AI device (e.g., FIG. 21, 100 x, 200 or 400) or the AI server (200) using wired/wireless communication technology. To this end, the communication unit 110 may transmit information in the memory unit 130 to an external device or transfer a signal received from the external device to the memory unit 130.

The control unit 120 may determine at least one executable operation of the AI device 100 based on information determined or generated using a data analysis algorithm or a machine learning algorithm. In addition, the control unit 120 may control the components of the AI device 100 to perform the determined operation. For example, the control unit 120 may request, search for, receive or utilize the data of the learning processor unit 140 c or the memory unit 130, and control the components of the AI device 100 to perform predicted operation or operation, which is determined to be desirable, of at least one executable operation. In addition, the control unit 120 may collect history information including operation of the AI device 100 or user's feedback on the operation and store the history information in the memory unit 130 or the learning processor unit 140 c or transmit the history information to the AI server (FIG. 21, 400). The collected history information may be used to update a learning model.

The memory unit 130 may store data supporting various functions of the AI device 100. For example, the memory unit 130 may store data obtained from the input unit 140 a, data obtained from the communication unit 110, output data of the learning processor unit 140c, and data obtained from the sensing unit 140. In addition, the memory unit 130 may store control information and/or software code necessary to operate/execute the control unit 120.

The input unit 140a may acquire various types of data from the outside of the AI device 100. For example, the input unit 140a may acquire learning data for model learning, input data, to which the learning model will be applied, etc. The input unit 140a may include a camera, a microphone, and/or a user input unit. The output unit 140b may generate video, audio, or tactile output. The output unit 140b may include a display, a speaker, and/or a haptic module. The sensing unit 140 may obtain at least one of internal information of the AI device 100, the surrounding environment information of the AI device 100 and user information using various sensors. The sensing unit 140 may include a proximity sensor, an illumination sensor, an acceleration sensor, a magnetic sensor, a gyro sensor, an inertia sensor, a red green blue (RGB) sensor, an infrared (IR) sensor, a finger scan sensor, an ultrasonic sensor, an optical sensor, a microphone, and/or a radar.

The input unit 140a may acquire various types of data from the outside of the AI device 100. For example, the input unit 140a may acquire learning data for model learning, input data, to which the learning model will be applied, etc. The input unit 140a may include a camera, a microphone, and/or a user input unit. The output unit 140b may generate video, audio, or tactile output. The output unit 140b may include a display, a speaker, and/or a haptic module. The sensing unit 140 may obtain at least one of internal information of the AI device 100, the surrounding environment information of the AI device 100 and user information using various sensors. The sensing unit 140 may include a proximity sensor, an illumination sensor, an acceleration sensor, a magnetic sensor, a gyro sensor, an inertia sensor, a red green blue (RGB) sensor, an infrared (IR) sensor, a finger scan sensor, an ultrasonic sensor, an optical sensor, a microphone, and/or a radar.

In summary, an embodiment may be implemented via a scheduling device and/or terminal.

For example, a device may be a BS, a network node, a transmitting UE, a receiving UE, a wireless device, a wireless communication device, a vehicle, a vehicle with autonomous driving capabilities, an unmanned aerial vehicle (UAV), an artificial intelligence (AI) module, a robot, an augmented reality (AR) device, a virtual reality (VR) device, or any other device.

For example, a UE may be any of a personal digital assistant (PDA), a cellular phone, a personal communication service (PCS) phone, a global system for mobile (GSM) phone, a wideband CDMA (WCDMA) phone, a mobile broadband system (MBS) phone, a smartphone, and a multi mode-multi band (MM-MB) terminal.

A smartphone refers to a terminal taking the advantages of both a mobile communication terminal and a PDA, which is achieved by integrating a data communication function being the function of a PDA, such as scheduling, fax transmission and reception, and Internet connection in a mobile communication terminal. Further, an MM-MB terminal refers to a terminal which has a built-in multi-modem chip and thus is operable in all of a portable Internet system and other mobile communication system (e.g., CDMA2000, WCDMA, and so on).

Alternatively, the UE may be any of a laptop PC, a hand-held PC, a tablet PC, an ultrabook, a slate PC, a digital broadcasting terminal, a portable multimedia player (PMP), a navigator, and a wearable device such as a smartwatch, smart glasses, and a head mounted display (HMD). For example, a UAV may be an unmanned aerial vehicle that flies under the control of a wireless control signal. For example, an HMD may be a display device worn around the head. For example, the HMD may be used to implement AR or VR.

The wireless communication technology in which various embodiments are implemented may include LTE, NR, and 6G, as well as narrowband Internet of things (NB-IoT) for low power communication. For example, the NB-IoT technology may be an example of low power wide area network (LPWAN) technology and implemented as the standards of LTE category (CAT) NB1 and/or LTE Cat NB2. However, these specific appellations should not be construed as limiting NB-IoT. Additionally or alternatively, the wireless communication technology implemented in a wireless device according to various embodiments may enable communication based on LTE-M. For example, LTE-M may be an example of the LPWAN technology, called various names such as enhanced machine type communication (eMTC). For example, the LTE-M technology may be implemented as, but not limited to, at least one of 1) LTE CAT 0, 2) LTE Cat M1, 3) LTE Cat M2, 4) LTE non-bandwidth limited (non-BL), 5) LTE-MTC, 6) LTE machine type communication, and/or 7) LTE M. Additionally or alternatively, the wireless communication technology implemented in a wireless device according to various embodiments may include, but not limited to, at least one of ZigBee, Bluetooth, or LPWAN in consideration of low power communication. For example, ZigBee may create personal area networks (PANs) related to small/low-power digital communication in conformance to various standards such as IEEE 802.15.4, and may be referred to as various names.

Various embodiments of the disclosure may be implemented by various means. For example, various embodiments of the disclosure may be implemented in hardware, firmware, software, or a combination thereof.

In a hardware configuration, the methods according to exemplary embodiments of the disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to the various embodiments of the disclosure may be implemented in the form of a module, a procedure, a function, etc. performing the above-described functions or operations. A software code may be stored in the memory and executed by the processor. The memory is located at the interior or exterior of the processor and may transmit and receive data to and from the processor via various known means.

Those skilled in the art will appreciate that the various embodiments of the disclosure may be carried out in other specific ways than those set forth herein without departing from the spirit and essential characteristics of the various embodiments of the disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an embodiment of the disclosure or included as a new claim by a subsequent amendment after the application is filed.

The various embodiments of disclosure are applicable to various wireless access systems. Examples of the various wireless access systems include a 3GPP system or a 3GPP2 system. Besides these wireless access systems, the various embodiments of the disclosure are applicable to all technical fields in which the wireless access systems find their applications. Moreover, the proposed methods are also applicable to an mmWave communication system using an ultra-high frequency band.

**Claims**

1. A method performed by a user equipment (UE) in a wireless communication system, the method comprising:

detecting a synchronization signal block (SSB) including a primary synchronization signal, a secondary synchronization signal, and a physical broadcast channel (PBCH);
initiating a random access procedure including transmission of a physical random access channel (PRACH) based on the SSB; and
performing uplink transmission to a base station (BS) on a serving cell based on the random access procedure, wherein the method comprises:

obtaining a plurality of deep neural network (DNN) candidates from among a plurality of DNNs; and
transmitting report information including information regarding the plurality of DNN candidates,
wherein the plurality of DNN candidates are obtained based on results of pre-training performed in advance based on a second number of target channel environments among a first number of target channel environments obtained by dividing an entire target channel environment, and
wherein the second number is smaller than the first number.

2. The method of claim 1, wherein each DNN included in the plurality of DNNs is pre-trained based on each target channel environment included in the second number of target channel environments, and
wherein a number of the plurality of DNNs is equal to the second number.

3. The method of claim 1, wherein based on that a specific target channel environment determined from the first number of target channel environments is not included in the second number of target channel environments, the plurality of DNN candidates are determined from among a plurality of DNNs pre-trained based on target channel environments adjacent to the specific target channel environment within the second number of target channel environments, where loss due to channel environment mismatch is less than a predefined threshold.

4. The method of claim 3, wherein the report information includes information regarding the specific target channel environment.

5. The method of claim 1, wherein information regarding DNN pairs related to the plurality of DNN candidates is received in response to the report information, and
wherein DNN combining is performed based on a plurality of DNNs included in the DNN pairs.

6. A user equipment (UE) configured to operate in a wireless communication system, the UE comprising:

a transceiver;
at least one processor connected to the transceiver; and
at least one memory storing instructions that, when executed, cause the at least one processor to perform operations comprising:

detecting a synchronization signal block (SSB) including a primary synchronization signal, a secondary synchronization signal, and a physical broadcast channel (PBCH);
initiating a random access procedure including transmission of a physical random access channel (PRACH) based on the SSB; and
performing uplink transmission to a base station (BS) on a serving cell based on the random access procedure,
wherein the operations comprise:

obtaining a plurality of deep neural network (DNN) candidates from among a plurality of DNNs; and
transmitting report information including information regarding the plurality of DNN candidates,
wherein the plurality of DNN candidates are obtained based on results of pre-training performed in advance based on a second number of target channel environments among a first number of target channel environments obtained by dividing an entire target channel environment, and
wherein the second number is smaller than the first number.

7. The UE of claim 6, wherein each DNN included in the plurality of DNNs is pre-trained based on each target channel environment included in the second number of target channel environments, and
wherein a number of the plurality of DNNs is equal to the second number.

8. The UE of claim 6, wherein based on that a specific target channel environment determined from the first number of target channel environments is not included in the second number of target channel environments, the plurality of DNN candidates are determined from among a plurality of DNNs pre-trained based on target channel environments adjacent to the specific target channel environment within the second number of target channel environments, where loss due to channel environment mismatch is less than a predefined threshold.

9. The UE of claim 8, wherein the report information includes information regarding the specific target channel environment.

10. The UE of claim 8, wherein information regarding DNN pairs related to the plurality of DNN candidates is received in response to the report information, and
wherein DNN combining is performed based on a plurality of DNNs included in the DNN pairs.

11. The UE of claim 6, wherein the operations comprise communicating with at least one of a mobile terminal, a network, or an autonomous vehicle other than a vehicle including the UE.

12. A method performed by a base station (BS) in a wireless communication system, the method comprising:

transmitting a synchronization signal block (SSB) including a primary synchronization signal, a secondary synchronization signal, and a physical broadcast channel (PBCH);
receiving a physical random access channel (PRACH) related to the SSB from a user equipment (UE); and
receiving an uplink signal from the UE on a serving cell based on a random access procedure of the UE related to the PRACH,
wherein the method comprises:

receiving report information including information regarding a plurality of deep neural network (DNN) candidates; and
obtaining the plurality of DNN candidates based on the report information,
wherein the plurality of DNN candidates are included in a plurality of DNNs,
wherein the plurality of DNN candidates are obtained based on results of pre-training performed in advance based on a second number of target channel environments among a first number of target channel environments obtained by dividing an entire target channel environment, and
wherein the second number is smaller than the first number.

13. A base station (BS) configured to operate in a wireless communication system, the BS comprising:

a transceiver;
at least one processor connected to the transceiver; and
at least one memory storing instructions that, when executed, cause the at least one processor to perform operations comprising:

transmitting a synchronization signal block (SSB) including a primary synchronization signal, a secondary synchronization signal, and a physical broadcast channel (PBCH);
receiving a physical random access channel (PRACH) related to the SSB from a user equipment (UE); and
receiving an uplink signal from the UE on a serving cell based on a random access procedure of the UE related to the PRACH,
wherein the operations comprise:

receiving report information including information regarding a plurality of deep neural network (DNN) candidates; and
obtaining the plurality of DNN candidates based on the report information,
wherein the plurality of DNN candidates are included in a plurality of DNNs,
wherein the plurality of DNN candidates are obtained based on results of pre-training performed in advance based on a second number of target channel environments among a first number of target channel environments obtained by dividing an entire target channel environment, and
wherein the second number is smaller than the first number.

14. An apparatus configured to operate in a wireless communication system, the apparatus comprising:

at least one processor; and
at least one memory operably connected to the at least one processor and storing one or more instructions that, based on execution, cause the at least one processor to perform operations comprising:

detecting a synchronization signal block (SSB) including a primary synchronization signal, a secondary synchronization signal, and a physical broadcast channel (PBCH);
initiating a random access procedure including transmission of a physical random access channel (PRACH) based on the SSB; and
performing uplink transmission to a base station (BS) on a serving cell based on the random access procedure,
wherein the operations comprise:

obtaining a plurality of deep neural network (DNN) candidates from among a plurality of DNNs; and
transmitting report information including information regarding the plurality of DNN candidates,
wherein the plurality of DNN candidates are obtained based on results of pre-training performed in advance based on a second number of target channel environments among a first number of target channel environments obtained by dividing an entire target channel environment, and

wherein the second number is smaller than the first number.

15. A non-transitory processor-readable medium configured to store one or more instructions that cause at least one processor to perform operations comprising:

detecting a synchronization signal block (SSB) including a primary synchronization signal, a secondary synchronization signal, and a physical broadcast channel (PBCH);

initiating a random access procedure including transmission of a physical random access channel (PRACH) based on the SSB; and

performing uplink transmission to a base station (BS) on a serving cell based on the random access procedure, wherein the operations comprise:

obtaining a plurality of deep neural network (DNN) candidates from among a plurality of DNNs; and

transmitting report information including information regarding the plurality of DNN candidates,

wherein the plurality of DNN candidates are obtained based on results of pre-training performed in advance based on a second number of target channel environments among a first number of target channel environments obtained by dividing an entire target channel environment, and

wherein the second number is smaller than the first number.

# FIG. 1

Initial Cell Search — PSS/SSS & [DL RS] & PBCH — S11

System Information Reception — PDCCH/ PDSCH (BCCH) — S12

Random Access Procedure — PRACH (S13), PDCCH/ PDSCH (S14), PUSCH (S15), PDCCH/ PDSCH (S16)

General DL/UL Tx/Rx — S18 — PDCCH/ PDSCH (S17), PUSCH/ PUCCH

- DL/UL ACK/NACK
- UE CQI/PMIRank Report using PUSCH and/or PUCCH

EP 4 645 934 A1

# FIG. 2

## FIG. 3

## FIG. 4

Input layer      Hidden layer      Output layer

Input-hidden weight    Hidden-output weight
$\mathbf{W}^{d \times H}$             $\mathbf{W}^{H \times K}$

## FIG. 5

## FIG. 6

Input layer

Hidden layer

Output layer

Input-hidden weight
$\mathbf{W}^{h \times W \times h \times W}$

Hidden-output weight
$\mathbf{W}^{h \times W \times h \times W}$

## FIG. 7

3 × 3
filter

$\sigma(\cdot)$

$\mathbf{W}^{3 \times 3}$

Weighted
product

Sum

Activation
function

# FIG. 8

**FIG. 9**

# FIG. 10

| One training channel environment | Multiple narrow training channel environments |
|---|---|
| DS and PDP | DS and PDP |
| Speed | Speed |
| DNN 1 | DNN 1   DNN 2  ···  DNN M |
| One DNN | Multiple DNNs |

Ch. Env. 1 data set
Ch. Env. 2 data set
Ch. Env. 3 data set
Ch. Env. 4 data set
→ DNN

Ch. Env. 1 data set — DNN1
Ch. Env. 2 data set — DNN2
Ch. Env. 3 data set — DNN3
Ch. Env. 4 data set — DNN4
→ output

# FIG. 11

DS and PDP

① ② ③ ④
⑤ ⑥ ⑦ ⑧

Speed

Colored : training DNNs

?? ➡ Speed

DS and PDP

① ② ③ ④
⑤ ⑥ ⑦ ⑧

Colored : training DNNs

① + ②
② + ③
④ + ③
④ + ①
③ + ①
④ + ②
① + ② + ③
⋮

# FIG. 12

# FIG. 13

# FIG. 14

## FIG. 15

DS and PDP

Colored : training DNNs

## FIG. 16

maximum 4 model downloaded for
9 target channel environments

DS and PDP

Colored : training DNNs

## FIG. 17

**FIG. 18**

UE

| obtaining DNN candidates | ~1801 |

| transmitting information regarding DNN candidates | ~1803 |

**FIG. 19**

Network Node

| receiving information regarding DNN candidates | ~1901 |

| obtaining DNN candidates | ~1903 |

**FIG. 20**

240

235

205

255

Receiver

RF Module

Transmitter

Power Management Module

Battery

210

DSP/ Microprocessor

Display — 215

Keypad — 220

250

245

Flash Memory, ROM, SRAM

SIM Card

230

225

# FIG. 21

<u>1</u>

# FIG. 22

# FIG. 23

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 24

140a

Power supply unit

100

108

110

Communication
unit

120

Control unit

130

Memory unit

140c

I/O unit

Display

140b

Interface unit

140d

# FIG. 25

## FIG. 26

100

| Communication unit | 120 |
| Input unit | 140a |
| Learning processor unit | 140c |

Control unit — 110

| Memory unit | 130 |
| Output unit | 140b |
| Sensor unit | 140d |

# EP 4 645 934 A1

<table>
<tr><td colspan="2">INTERNATIONAL SEARCH REPORT</td><td>International application No.<br><br>**PCT/KR2022/021517**</td></tr>
</table>

| **A.** | **CLASSIFICATION OF SUBJECT MATTER** |
|---|---|

**H04W 24/02**(2009.01)i; **H04W 56/00**(2009.01)i; **H04W 74/08**(2009.01)i; **H04W 24/10**(2009.01)i; **G06N 3/08**(2006.01)i

According to International Patent Classification (IPC) or to both national classification and IPC

| **B.** | **FIELDS SEARCHED** |
|---|---|

Minimum documentation searched (classification system followed by classification symbols)

H04W 24/02(2009.01); G06N 20/00(2019.01); G06N 3/08(2006.01); H04L 12/18(2006.01); H04W 28/02(2009.01); H04W 56/00(2009.01); H04W 74/00(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DNN(deep neural network), candidate, target channel, pre-training, number, SSB, PSS, SSS, PBCH, PRACH, random access (RA), uplink

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | WO 2020-167083 A1 (LG ELECTRONICS INC.) 20 August 2020 (2020-08-20)<br>    See paragraphs [0093]-[0222]; and figure 20. | 1-15 |
| A | US 2019-0274108 A1 (DEEPSIG INC.) 05 September 2019 (2019-09-05)<br>    See paragraphs [0259]-[0268]; and figure 10. | 1-15 |
| A | US 2022-0014963 A1 (YEH, Shu-Ping et al.) 13 January 2022 (2022-01-13)<br>    See paragraphs [0048]-[0133]; and figures 2-6. | 1-15 |
| A | US 2021-0158151 A1 (GOOGLE LLC) 27 May 2021 (2021-05-27)<br>    See paragraphs [0166]-[0211]; and figures 13-18. | 1-15 |
| A | YANG, Yuwen et al. Deep Learning-Based Channel Estimation for Doubly Selective Fading Channels. Published in: IEEE Access (Volume: 7). 22 March 2019.<br>    See section III. | 1-15 |

| ☐ Further documents are listed in the continuation of Box C. | ☑ See patent family annex. |
|---|---|

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 September 2023** | **25 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2022/021517** |

| Patent document cited in search report | | | Publication date (day/month/year) | Patent family member(s) | | | Publication date (day/month/year) |
| --- | --- | --- | --- | --- | --- | --- | --- |
| WO | 2020-167083 | A1 | 20 August 2020 | KR | 10-2021-0122857 | A | 12 October 2021 |
| | | | | US | 2022-0141877 | A1 | 05 May 2022 |
| | | | | WO | 2020-167083 | A8 | 19 August 2021 |
| US | 2019-0274108 | A1 | 05 September 2019 | EP | 3759654 | A1 | 06 January 2021 |
| | | | | EP | 3759654 | A4 | 08 September 2021 |
| | | | | US | 10531415 | B2 | 07 January 2020 |
| | | | | US | 11259260 | B2 | 22 February 2022 |
| | | | | US | 2020-0145951 | A1 | 07 May 2020 |
| | | | | US | 2022-0174634 | A1 | 02 June 2022 |
| | | | | WO | 2019-169400 | A1 | 06 September 2019 |
| US | 2022-0014963 | A1 | 13 January 2022 | CN | 115119331 | A | 27 September 2022 |
| | | | | DE | 102022200847 | A1 | 22 September 2022 |
| US | 2021-0158151 | A1 | 27 May 2021 | CN | 114762295 | A | 15 July 2022 |
| | | | | EP | 4058939 | A1 | 21 September 2022 |
| | | | | WO | 2021-108082 | A1 | 03 June 2021 |

Form PCT/ISA/210 (patent family annex) (July 2022)